# FASCICULE DE BREVET EUROPEEN

(11) **EP 2 101 984 B1**
(45) Date de publication et mention de la délivrance du brevet: **12.02.2014**
(21) Numéro de dépôt: 07870378.2
(22) Date de dépôt: 04.12.2007
(51) Int. Cl.: B29C 49/42, B29K 67/00, B29C 49/58, B29C 49/78, B29C 49/16, B29C 49/06

(54) **PROCÉDÉ DE FABRICATION D'UN RÉCIPIENT À PARTIR D'UNE ÉBAUCHE, AVEC RÉTROACTION EN FONCTION DU POINT DE DÉVELOPPEMENT DE L'ÉBAUCHE**
HERSTELLUNGSVERFAHREN EINES BEHÄLTERS AUSGEHEND VON EINEM VORFORMLING, MIT RÜCKFÜHRUNG IN ABHÄNGIGKEIT DER AUSWEITUNG DES VORFOMLINGS
METHOD FOR PRODUCING A VESSEL FROM A PREFORM WITH FEEDBACK DEPENDING ON THE PREFORM DEVELOPMENT POINT

(30) Priorité: 05.12.2006 FR 0610620
(43) Date de publication de la demande: 23.09.2009
(73) Titulaire: Sidel Participations, 76930 Octeville Sur Mer (FR)
(72) Inventeur: MONIN, Isabelle, F-76930 Octeville Sur Mer (FR); DEAU, Thierry, F-76930 Octeville Sur Mer (FR)
(74) Mandataire: Louiset, Raphael
(86) Numéro de dépôt international: PCT/FR2007/001991
(87) Numéro de publication internationale: WO 2008/081108

(56) Documents cités:
- EP-A- 1 355 215
- EP-A- 1 616 688
- EP-A1- 1 355 215
- EP-A2- 1 616 688
- WO-A-2004/045832
- WO-A1-2004/045832
- DE-A1- 10 116 665
- DE-A1- 10 116 665
- DE-A1- 10 153 045
- DE-A1- 10 153 045
- FR-A1- 2 827 541
- FR-A1- 2 827 541
- US-A- 4 042 657
- US-A- 4 042 657
- US-B1- 6 186 760
- US-B1- 6 186 760

## Description

L'invention a trait à la fabrication des récipients par soufflage ou étirage soufflage, à partir d'ébauches en matière plastique.

Pour fabriquer un récipient suivant la technique du soufflage, on commence par chauffer une ébauche (qu'il s'agisse d'une préforme ou d'un récipient intermédiaire ayant subi une première opération de soufflage à partir d'une préforme) à une température supérieure à la température de transition vitreuse de la matière constitutive de l'ébauche. On introduit ensuite l'ébauche dans un moule, puis on effectue le soufflage de l'ébauche en y injectant un gaz (tel que de l'air) sous haute pression (généralement supérieure à 30 bars). La technique de l'étirage soufflage consiste, outre le soufflage, à étirer l'ébauche au moyen d'une tige coulissante, afin notamment de minimiser le désaxement du récipient et d'uniformiser autant que possible la répartition de la matière.

Pour éviter l'éclatement de l'ébauche lors de l'opération de soufflage, on prévoit généralement, préalablement au soufflage, une opération de présoufflage, lors de laquelle on injecte dans l'ébauche un gaz sous une pression réduite (généralement comprise entre 5 et 16 bars). C'est pendant l'opération de présoufflage qu'est réalisé l'étirage de l'ébauche, le soufflage n'intervenant qu'ensuite.

Dans un contexte de production industrielle où les cadences de fabrication atteignent plusieurs dizaines de milliers de récipients par heure et par machine (une machine comprend généralement plusieurs moules montés sur un carrousel tournant), la durée du procédé de fabrication d'un récipient, entre l'instant d'introduction de l'ébauche dans le moule et l'instant d'éjection du récipient formé, est de quelques secondes. Quant à la durée du présoufflage, elle est de quelques dixièmes de seconde seulement.

La volonté constante des industriels de réduire la quantité de matière employée pour chaque récipient, combinée à la vélocité du procédé, rend délicate la fabrication et peut conduire à des taux de rebut importants. Parmi les principaux défauts constatés sur les récipients, figure une mauvaise répartition de la matière. La difficulté qu'il y a à combiner l'économise de matière et l'augmentation des cadences a conduit les industriels à s'intéresser de plus près au déroulement du procédé en surveillant les variations de certains paramètres au cours du temps, le principal étant la pression régnant dans l'ébauche, combinée à la vitesse d'étirage.

Certains, tels Du Pont De Nemours dans son brevet américain US 4 042 657, suggèrent qu'il existe une corrélation entre les variations de pression dans l'ébauche et la forme finale du récipient, et préconisent de rejeter les récipients dont la courbe de pression ne se conformerait pas à une courbe standard. Si la proposition de rejeter les récipients non conformes permet d'améliorer la qualité globale de la production, elle grève toutefois la productivité et, dans l'hypothèse où les récipients rejetés ne seraient pas recyclés, conduit à un gaspillage de matière alors même que l'on souhaite l'économiser. Un enseignement similaire est décrit dans le document US 6 186 760 B1.

L'invention vise notamment à remédier à ces inconvénients, en proposant un procédé permettant d'améliorer la qualité des récipients produits, tout en limitant le rebut, et en maintenant - voire en augmentant - les cadences de production.

À cet effet, l'invention propose, suivant un premier objet, un procédé de fabrication d'un récipient par étirage soufflage dans un moule à partir d'une ébauche en matière plastique, qui comprend les opérations consistant à :
- chauffer l'ébauche à une température de chauffe prédéterminée ;
- introduire l'ébauche dans le moule ;
- étirer l'ébauche au moyen d'une tige déplacée à une vitesse d'étirage prédéterminée ;
- à un instant prédéterminé, dénommé top présoufflage, commander l'ouverture d'une électrovanne pour mettre en communication l'intérieur de l'ébauche avec une source de gaz à une pression de présoufflage et un débit de présoufflage prédéterminés ;
- mesurer la pression régnant à l'intérieur de l'ébauche ;
- détecter un pic de pression ;
- mémoriser l'instant auquel se produit ce pic de pression ainsi que la pression correspondante régnant dans l'ébauche ;
- comparer l'instant et la pression du pic détecté avec, respectivement, un instant et une pression prédéterminés d'un pic théorique de pression ;
- si le pic mesuré et le pic théorique ne sont pas confondus, modifier au moins l'un des paramètres suivants : pression de présoufflage, débit de présoufflage, top présoufflage, vitesse d'étirage, température de chauffe.

On a pu constater que non seulement les récipients ainsi réalisés présentent, par rapport aux récipients obtenus par les procédés traditionnels, une qualité en moyenne supérieure grâce à une meilleure répartition de la matière, mais également que cette qualité se révèle plus constante au cours du temps.

Les opérations de réglage suivantes peuvent être effectuées, selon les situations constatées :
- si l'instant et la pression du pic détecté sont, respectivement, antérieur et inférieure à l'instant et à la pression du pic théorique, diminuer la température de chauffe.
- si l'instant et la pression du pic détecté sont, respectivement, antérieur et égale à l'instant et à la pression du pic théorique, diminuer la pression ou le débit de présoufflage. Une opération supplémentaire peut dans ce cas consister à diminuer la température de chauffe.
- si l'instant et la pression du pic détecté sont, respectivement, antérieur et supérieure à l'instant et à la pression du pic théorique, diminuer la pression ou le débit de présoufflage.
- si l'instant et la pression du pic détecté sont, respectivement, égal et supérieure à l'instant et à la pression du pic théorique, diminuer la pression ou le débit de présoufflage. Dans ce cas, une opération supplémentaire peut consister à augmenter la température de chauffe.
- si l'instant et la pression du pic détecté sont, respectivement, postérieur et supérieure à l'instant et à la pression du pic théorique, augmenter la température de chauffe. Dans ce cas, une opération supplémentaire peut consister à diminuer le débit de présoufflage et/ou à avancer le top présoufflage.
- si l'instant et la pression du pic détecté sont, respectivement, postérieur et égale à l'instant et à la pression du pic théorique, augmenter la pression ou le débit de présoufflage. Dans ce cas, une opération supplémentaire peut consister à augmenter la température de chauffe.
- si l'instant et la pression du pic détecté sont, respectivement, postérieur et inférieure à l'instant et à la pression du pic théorique, augmenter la pression ou le débit de présoufflage.
- si l'instant et la pression du pic détecté sont; respectivement, égal et inférieure à l'instant et à la pression du pic théorique, augmenter la pression ou le débit de présoufflage. Dans ce cas, une opération supplémentaire peut consister à diminuer la température de chauffe.

Un objet supplémentaire de l'invention est un produit programme d'ordinateur destiné à être implémenté sur une machine de fabrication de récipients telle que décrite ci-dessus, qui comprend des instructions pour :
- commander l'ouverture de l'électrovanne ;
- prendre en compte l'instant de développement ;
- prendre en compte la pression de développement ;
- prendre en compte l'instant théorique de développement ;
- prendre en compte la pression théorique de développement ;
- comparer l'instant de développement avec l'instant théorique de développement ;
- comparer la pression de développement avec la pression théorique de développement ;
- réguler l'un au moins des paramètres suivants : pression de présoufflage, débit de présoufflage, top présoufflage, vitesse d'étirage, température de chauffe en fonction du résultat de ces comparaisons.

D'autres objets et avantages de l'invention apparaîtront à la lumière de la description faite ci-après en référence aux dessins annexés dans lesquels :
- la figure 1 est une vue schématique montrant une machine de fabrication de récipients ;
- la figure 2 est une vue schématique en coupe montrant partiellement une unité de moulage au sein de la machine de la figure 1 ;
- la figure 3 est un diagramme sur lequel est tracée une courbe illustrant les variations de la pression régnant dans une ébauche au cours de la fabrication d'un récipient ;
- la figure 4 est un diagramme sur lequel est tracé une courbe illustrant les variations de la pression régnant dans l'ébauche au cours de l'opération de présoufflage ;
- les figures 5A à 5H sont des vues en coupe montrant l'ébauche dans le moule, à différents stades au cours du présoufflage ;
- la figure 6 est un diagramme montrant la superposition de deux courbes de pression correspondant respectivement à deux instants différents de commande d'ouverture d'une électrovanne de présoufflage ;
- la figure 7 est un diagramme montrant la superposition de deux courbes de pression correspondant respectivement à deux valeurs distinctes de la pression ou du débit de présoufflage ;
- la figure 8 est un diagramme montrant la superposition de deux courbes de pression correspondant respectivement à deux valeurs distinctes de la vitesse d'étirage ;
- la figure 9 est un diagramme montrant la superposition de deux courbes de pression correspondant respectivement à deux valeurs distinctes de la température de chauffe de l'ébauche ; et
- la figure 10 est un diagramme montrant la superposition de deux courbes de pression correspondant respectivement à deux instants de commande d'ouverture d'une électrovanne de soufflage.

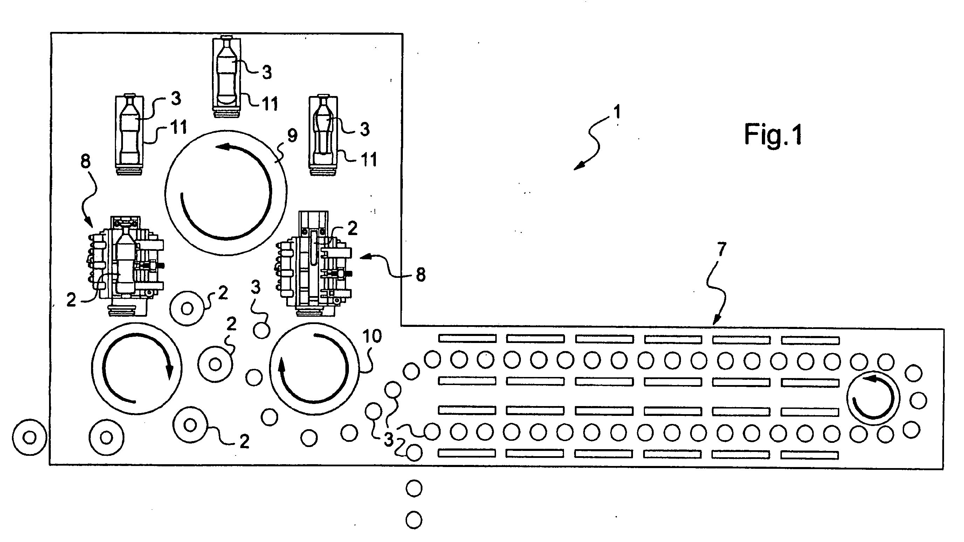

Sur la figure 1 est représentée une machine 1 pour la fabrication de récipients 2 à partir d'ébauches 3 en matière plastique tel que PET (polyéthylène téréphtalate). Suivant un mode préféré de réalisation, les ébauches **3** sont des préformes à partir desquelles les récipients **2** finaux sont directement obtenus, sans passage par un récipient intermédiaire. Chaque préforme **3** comprend un col **4** (qui ne subit pas de déformation au cours de la formation du récipient **2**), et un corps **5** cylindrique terminé par un fond **6** hémisphérique.

Cette machine **1** comprend un four **7** de type tunnel, dans lequel les préformes **3** sont chauffées au défilé à une température supérieure à la température de transition vitreuse de leur matière constitutive. Dans le cas du PET, dont la température de transition vitreuse est voisine de 80°C, la température de chauffe est de préférence comprise entre 100°C et 140°C.

La machine **1** comprend en outre une pluralité d'unités **8** de moulage montées sur un carrousel **9** tournant disposé en sortie du four **7** avec interposition d'une roue **10** de transfert assurant la synchronisation des opérations de chauffe et de moulage des préformes **3**.

Chaque unité **8** de moulage comporte un moule **11**, réalisé en acier ou en alliage d'aluminium, comprenant deux demi-moules **12**, **13** et un fond de moule **14** qui définissent ensemble une cavité 15 interne, destinée à recevoir une préforme **3** en provenance du four **7**.

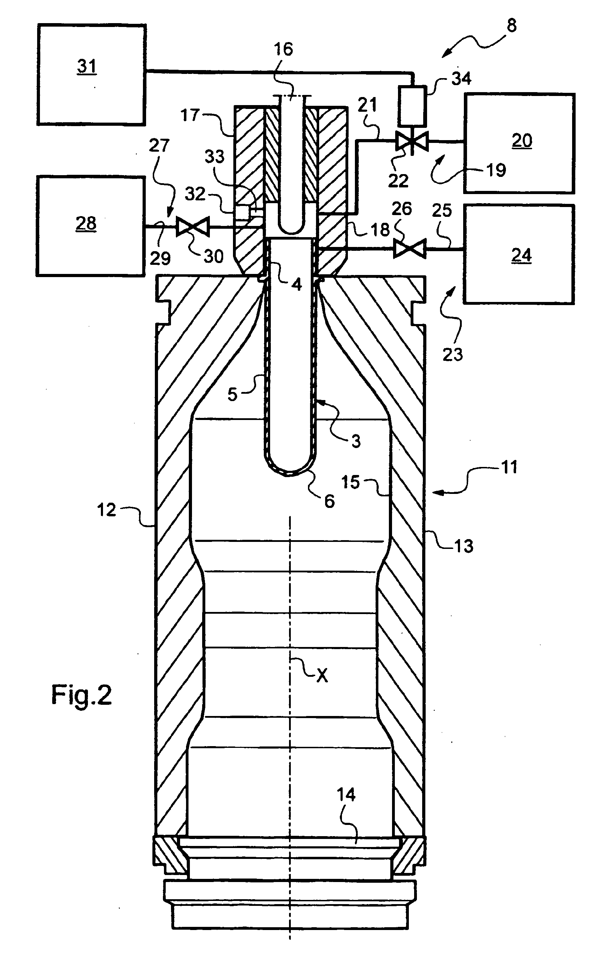

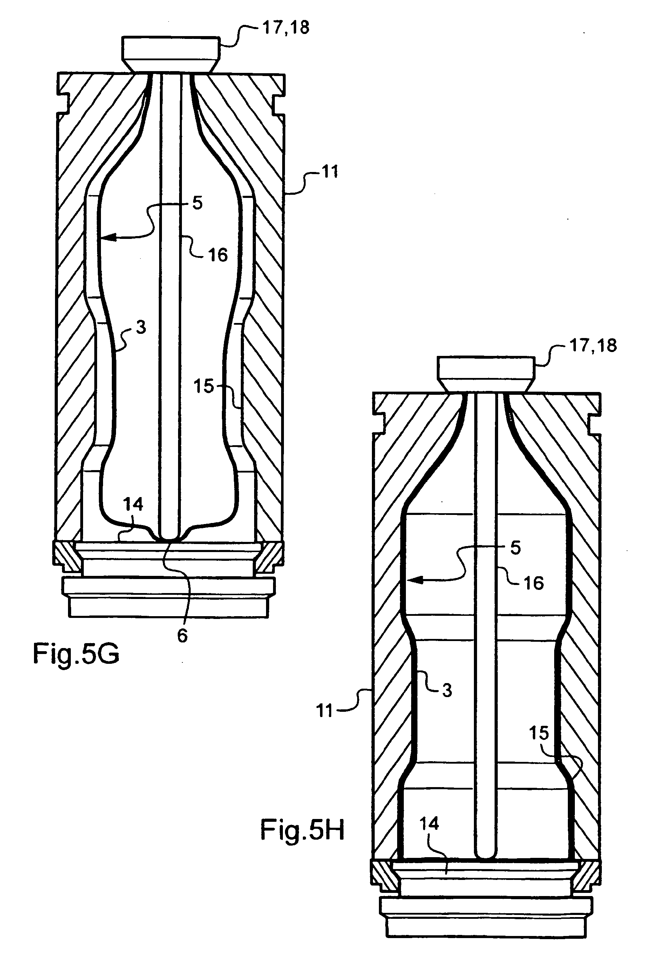

Chaque unité **8** de moulage comprend en outre :
- une tige **16** d'élongation montée coulissante par rapport au moule **11** le long d'un axe **X** principal (généralement de révolution) de celui-ci, entre une position haute (figure 2) permettant l'introduction de la préforme **3** et une position basse (figure 5H) où, à la fin de l'étirage de la préforme **3**, la tige **16** atteint le fond de moule **14** en y plaquant le fond 6 de celle-ci,
- un boîtier **17** définissant une tuyère **18** dans laquelle coulisse la tige **16** et qui, lors de la fabrication du récipient 2, coopère avec le col **4** de la préforme **3**.

L'unité **8** de moulage comprend en outre plusieurs circuits fluidiques débouchant dans la tuyère **18** via le boîtier **17**, à savoir :
- un circuit **19** d'air de présoufflage à moyenne pression (comprise entre **5** et **16** bars), ce circuit **19** comprenant une source **20** d'air de présoufflage et un conduit **21** (qui peut être formé au moins partiellement dans le boîtier **17**) reliant cette source **20** à la tuyère **18** avec interposition d'une première électrovanne **22**, dite électrovanne de présoufflage,
- un circuit **23** d'air de soufflage à haute pression (comprise entre 30 et 40 bars), comprenant une source **24** d'air de soufflage et un conduit **25** (qui peut être formé au moins partiellement dans le boîtier **17**) reliant cette source **24** à la tuyère **18** avec interposition d'une deuxième électrovanne **26**, dite électrovanne de soufflage,
- un circuit **27** de dégazage comprenant une bouche **28** de mise à l'air libre et un conduit **29** reliant la tuyère **18** à cette bouche **28** avec interposition d'une troisième électrovanne **30**, dite électrovanne de dégazage.

Les électrovannes **22**, **26**, **30** sont raccordées électriquement à une unité **31** de contrôle qui en commande l'ouverture et la fermeture (en tenant dûment compte de leurs temps de réponse). Ces électrovannes peuvent **22**, **26**, **30** être disposées à distance du boîtier ; toutefois, pour plus de compacité, elles sont de préférence au moins partiellement incluses dans celui-ci, conformément à la réalisation décrite dans la demande de brevet français publiée sous le numéro FR 2 872 082 ou dans la demande internationale équivalente publiée sous le numéro WO 2006/008380, documents tous deux au nom de la demanderesse et auxquels l'homme du métier pourra se référer.

L'unité **8** de moulage est par ailleurs pourvue d'un capteur **32** de pression grâce auquel est mesurée la pression régnant dans la préforme **3** au cours de la fabrication du récipient **2**. A cet effet, le capteur **32**, relié à l'unité **31** de contrôle qui mémorise les mesures de pression réalisées, est muni d'une partie **33** sensible débouchant dans la tuyère **18** (où la pression est identique à celle régnant dans la préforme **3**).

La fabrication d'un récipient **2** à partir d'une préforme 3 est réalisée comme suit.

La préforme 3, montée sur un convoyeur, est tout d'abord introduite dans le four **7** où elle est chauffée, col **4** en bas, dans les conditions décrites ci-dessus. Au sortir du four 7, la préforme **3** est saisie par une pince de la roue **10** de transfert et introduite, après avoir été retournée pour être orientée col **4** en haut, dans un moule **11** préalablement ouvert. Dans cette position, la tige **16** d'élongation est en position haute.

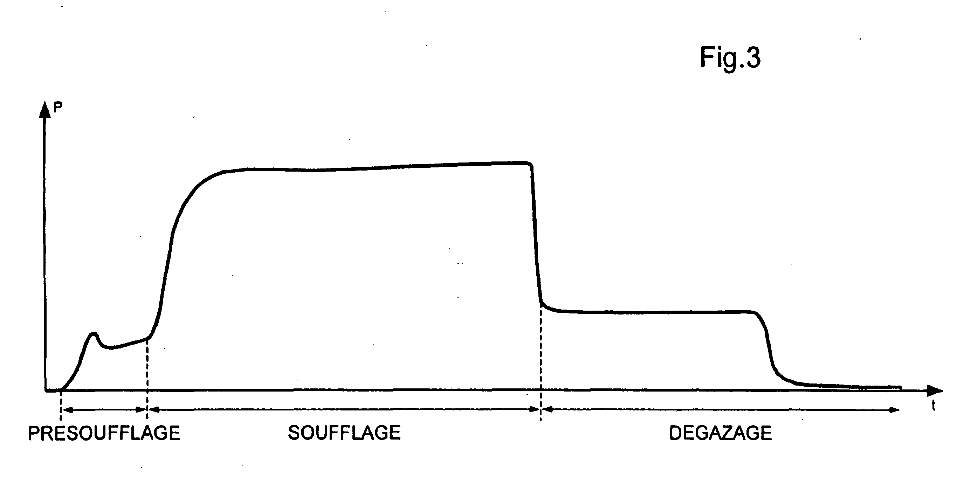

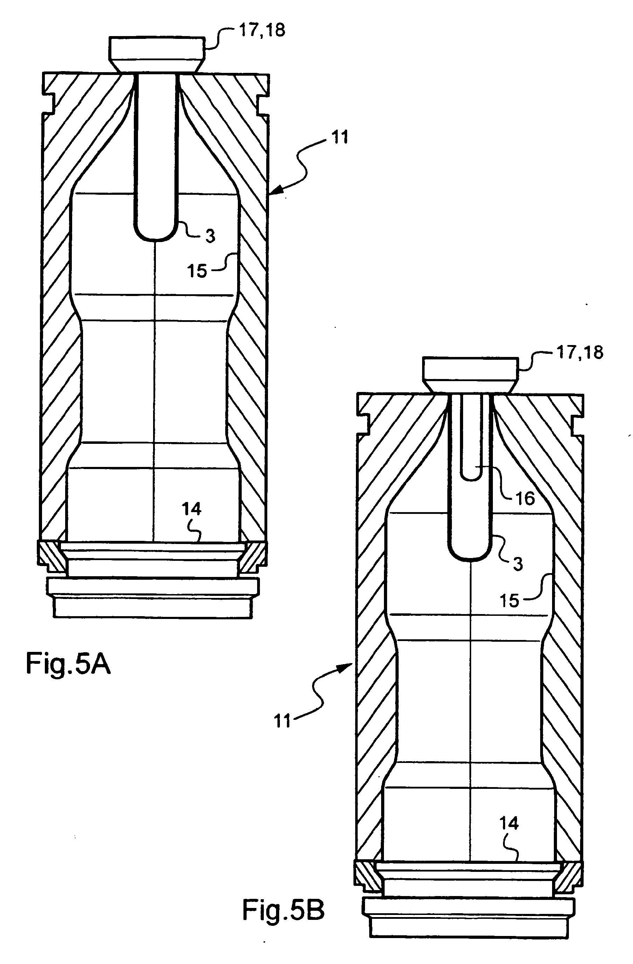

Au fur et à mesure de la rotation du carrousel **9**, le moule **11** se referme sur la préforme **3**. Une fois le moule **11** fermé (figure 5A), débute, à un instant prédéterminé dénommé top départ **t_{D}**, la descente de la tige **16** d'élongation dans la cavité **15** de moulage (figure 5B). Le top départ constitue l'origine de l'axe des temps (abscisses) sur les figures 3, 4 et 6 à 10. A partir de cet instant on mesure en continu la pression **P** régnant dans la préforme, chaque valeur étant mémorisée dans l'unité **31** de contrôle. Le terme « en continu » signifie que la période à laquelle sont effectuées les mesures de pression est faible devant les temps nécessaires aux variations de pression dans la préforme **3**. A cet effet, on choisira un capteur **32** à hautes performances, permettant de réaliser des mesures de pression à une période inférieure ou égale à **5** ms (milliseconde), de préférence inférieure ou égale à **2** ms, l'idéal étant de pouvoir effectuer les mesures à une période de **1** ms.

Au top départ correspond une position angulaire prédéfinie du moule 11 sur la circonférence du carrousel **9**. Suivant un premier mode de réalisation, la commande du déplacement de la tige **16** d'élongation est purement mécanique, réalisée au moyen d'une came contre laquelle roule ou coulisse un suiveur de came solidaire de la tige **16** d'élongation. Dans ce cas, l'instant où la tige **16** d'élongation débute sa descente est confondu avec le top départ, lequel correspond à l'instant où le suiveur de came entre en contact avec la came.

Suivant un second mode de réalisation, le déplacement de la tige **16** d'élongation est assuré par un système électromécanique commandé par l'unité **31** de contrôle. Dans ce cas, l'instant où débute la descente de la tige **16** d'élongation est décalé par rapport au top départ d'une valeur d'offset égale au temps de réponse du système électromécanique. Cette valeur d'offset, fournie par le fabricant du système, est prise en compte dans le réglage du top départ pour que la descente de la tige **16** d'élongation débute aussi tôt que possible après la fermeture du moule **11**. On note **V_{E}** la vitesse de déplacement de la tige **16** d'élongation, cette vitesse étant également dénommée vitesse d'étirage.

À un instant prédéterminé, dénommé top présoufflage **t_{P}**, l'unité **31** de contrôle commande l'ouverture de l'électrovanne **22** de présoufflage pour mettre en communication l'intérieur de la préforme **3** avec la source **20** d'air de présoufflage.

L'instant, dénommé instant réel de début de présoufflage et noté **t_{A}**, à partir duquel la pression **P** dans la préforme **3** commence à croître, accuse un retard par rapport au top présoufflage **t_{P}**, égal au temps de réponse de l'électrovanne **22** de présoufflage.

Ce retard, soit fourni par le constructeur de l'électrovanne **22**, soit mesuré, est pris en compte dans le réglage du top présoufflage t_{P}, pour que l'instant réel **t_{A}** de début de présoufflage commence après l'instant où la tige **16** d'élongation atteint le fond de la préforme 3, cet instant pouvant être calculé de manière simple à partir de la vitesse (connue) de descente de la tige **16** d'élongation et de la longueur (également connue) de la préforme **3**.

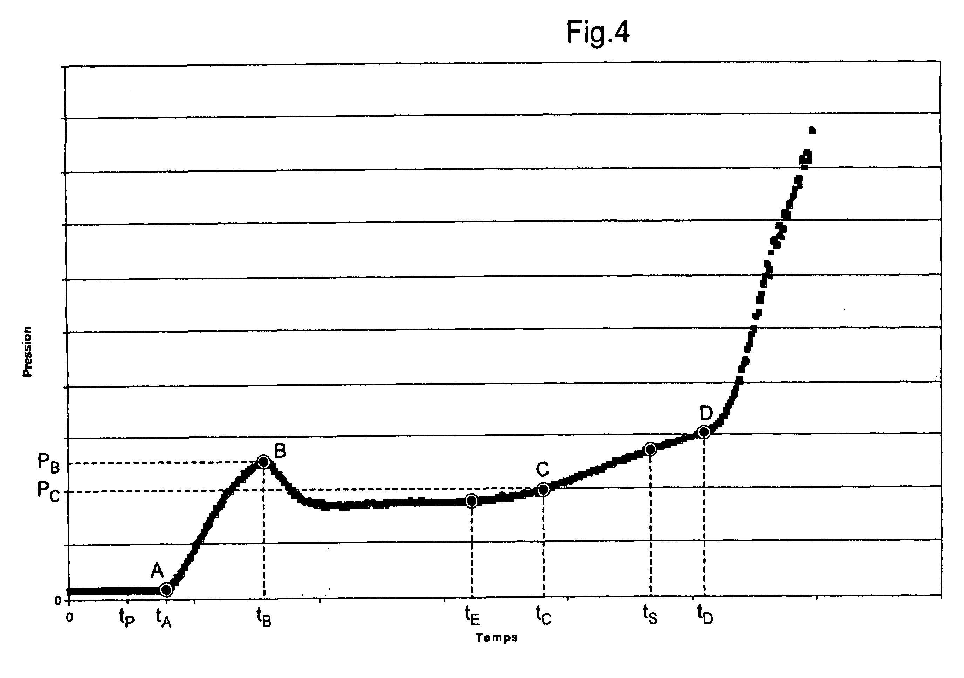

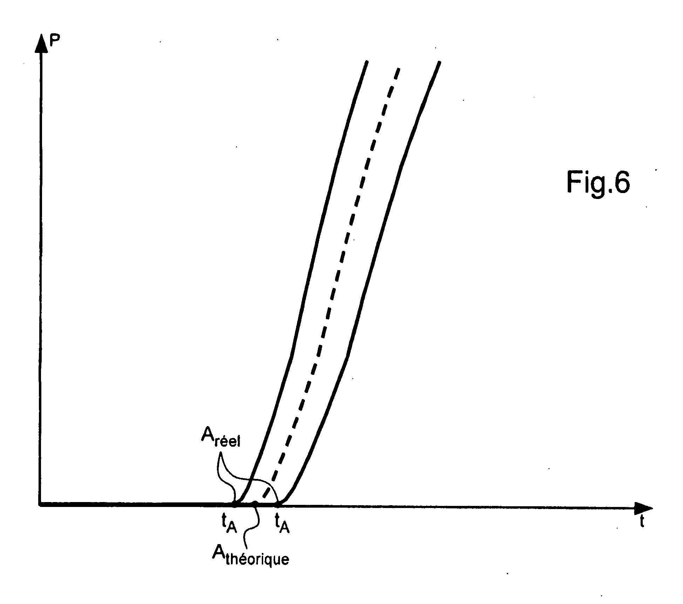

Sur les figures 4 et 6, le point de la courbe ayant pour abscisse l'instant réel **t_{A}** de début de présoufflage est noté **A**. À ce point correspond une pression (relative) sensiblement nulle, la pression régnant dans la préforme **3** lors de son introduction dans le moule **11** étant en effet sensiblement égale à la pression atmosphérique.

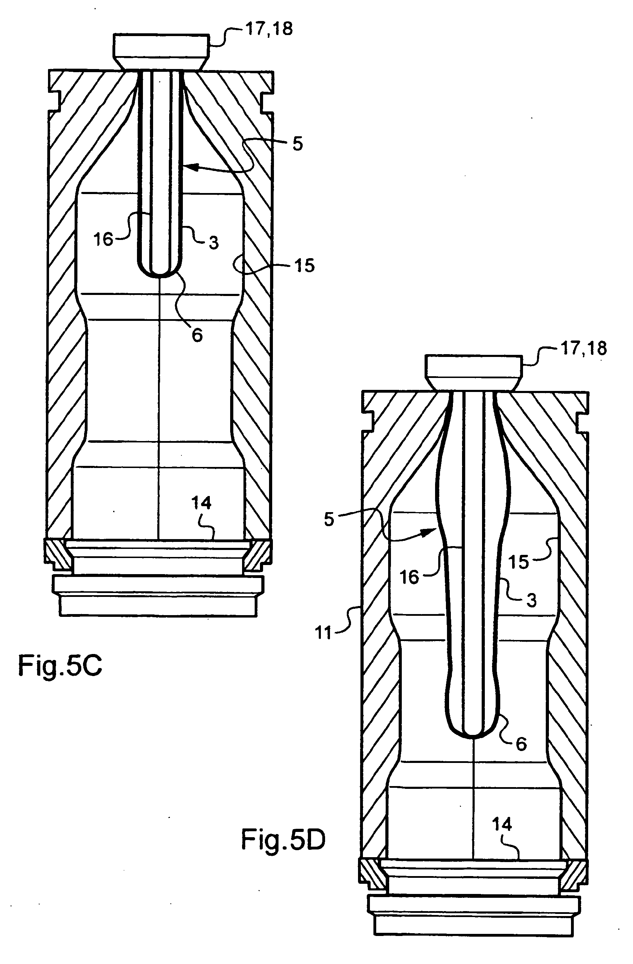

A partir du point **A** débute une phase d'expansion axiale de la préforme **3**. Comme cela est visible sur les figures 4 et 6, la pente de la courbe de pression au point **A** est nulle à gauche, et positive à droite. A partir du point **A**, la pression dans la préforme **3** croît à mesure qu'elle est étirée, le débit d'air introduit dans la préforme **3** étant supérieur à l'accroissement du volume interne de la préforme **3** (laquelle ne subit aucune expansion radiale, Cf. figure 5C), jusqu'à un instant, dénommé instant de développement et noté **t_{B}**, où le seuil d'écoulement plastique de la préforme **3** a été atteint. A cet instant **t_{B}** se produit un pic de pression, le point correspondant, dénommé point de développement, étant noté **B** sur les figures 4 et 7 à 9. Au point **B** la pente de la courbe de soufflage est nulle, cette pente s'inversant de gauche (où elle est positive) à droite (où elle est négative) du point **B**. La pression correspondante, dénommée pression de développement, est notée **P_{B}**.

A partir de l'instant **t_{B}** de développement débute une phase d'expansion axiale et radiale de la préforme. Au début de cette phase, immédiatement après le point de développement, on note une chute momentanée Δ**P** de la pression **P** régnant dans la préforme (figure 5D). Cette chute Δ**P** de pression est due au début soudain de l'expansion radiale de la préforme **3**, laquelle, son seuil d'écoulement plastique dépassé, subit alors une déformation plastique.

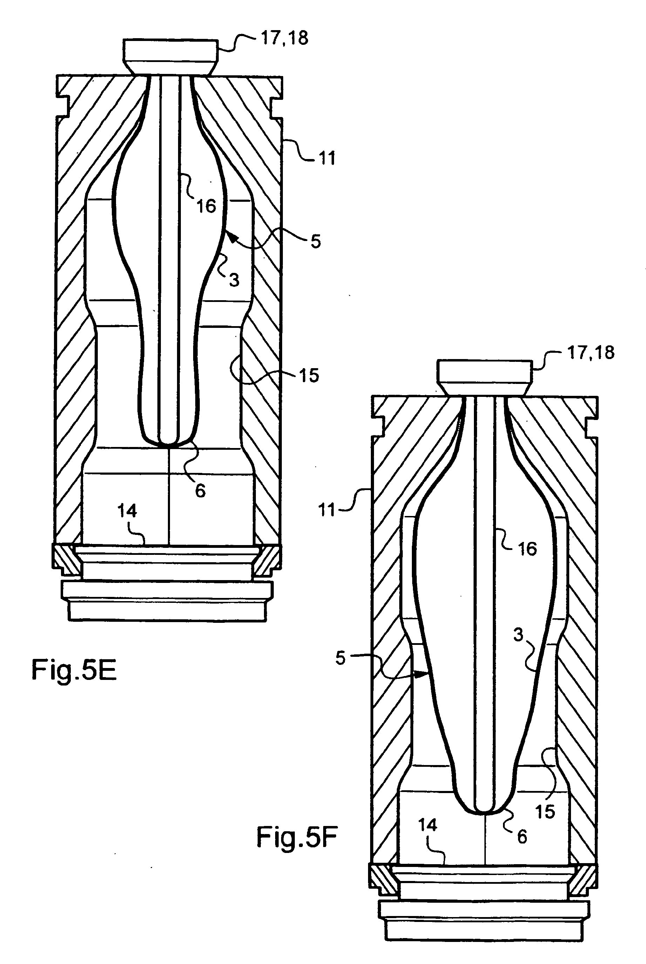

Après avoir chuté d'une valeur Δ**P** d'environ 1 bar, la pression **P** se maintient, l'accroissement du volume de la préforme 3 compensant le débit d'air injecté dans celle-ci (figures 5E, 5F). Cette phase d'expansion radiale et axiale prend fin lorsque se termine l'étirage, la tige **16** d'élongation ayant atteint sa position basse où elle plaque le fond **6** de la préforme **3** contre le fond de moule **14** (figure 5G).

La combinaison d'une déformation radiale et d'une déformation axiale de la préforme **3** conduit à une bi-orientation (axiale et radiale) des macromolécules de la matière, qui a notamment pour effet d'accroître la tenue mécanique du récipient **2** et de diminuer sa perméabilité aux gaz et aux liquides. Pour de plus amples informations, on pourra se reporter à l'ouvrage de Rosato et DiMattia, « Blow Molding Handbook » (2e édition, Hanser, 2004).

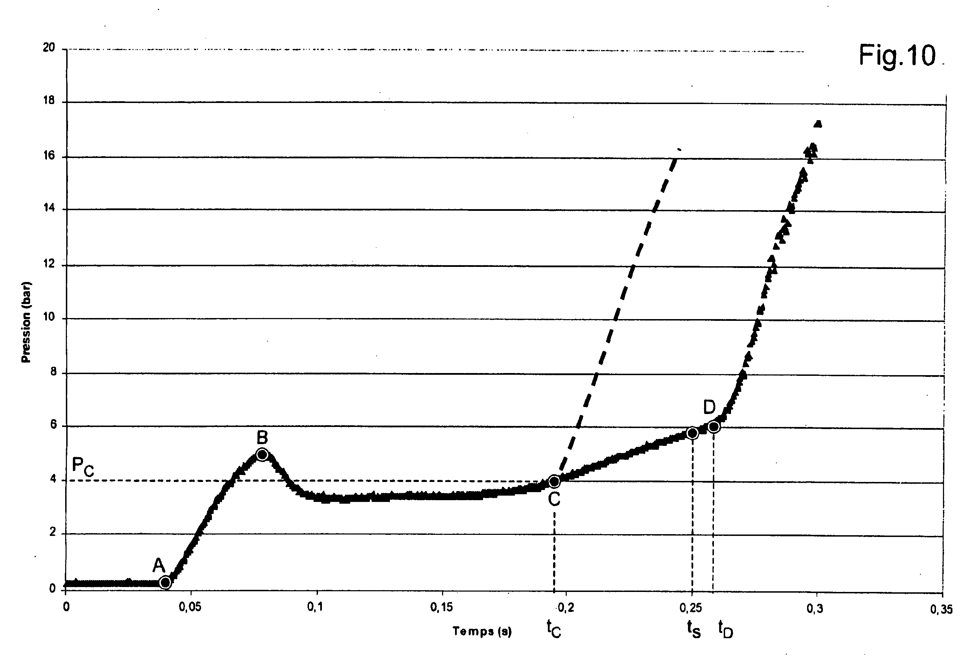

Après la fin de l'étirage, la tige **16** étant maintenue dans sa position basse, se déroule une phase d'expansion radiale de la préforme **3** lors de laquelle on ne note pas d'inflexion de la pression **P**, qui continue d'être stable. C'est pourquoi à l'instant, noté **t_{E}**, où prend fin l'étirage, ne correspond aucun point singulier sur la courbe de pression, cet instant **t_{E}** étant toutefois connu car prédéterminé par la valeur (éventuellement réglable) de la vitesse V_{E} d'étirage et la hauteur du récipient **2**. Cette phase d'expansion radiale prend fin à un instant, dénommé instant de fin d'expansion, noté **t_{c}**, où la préforme **3** a atteint la surface de la cavité **15** sur sensiblement toute sa hauteur, en d'autres termes lorsque le volume interne de la préforme **3** est quasiment égal au volume final du récipient **2**, si l'on excepte des zones localisées où le contact entre la préforme **3** et la cavité **15** n'est pas complet, par exemple dans des zones où sont ménagées des nervures, gorges ou autres renfoncements visant à conférer au récipient **2** une meilleure tenue ou une certaine esthétique (figure 5H). A l'instant **t_{c}** de fin d'expansion correspond sur la courbe de pression un point singulier, dénommé point de fin d'expansion et noté **C** sur les figures 4 et 10, où la courbe s'infléchit et présente un accroissement de sa pente. La pression au point **C**, dénommée pression de fin d'expansion, est notée **P_{c}**.

A partir du point **C** de fin d'expansion débute une phase de croissance de la pression **P** dans la préforme **3**, à volume constant. Le débit, noté **D_{P}** et la pression, notée **P_{P}**, d'air de présoufflage étant maintenus constants, la pression **P** dans la préforme **3** croît de façon linéaire jusqu'à un instant, noté **t_{D}**, de début de soufflage à partir duquel débute une phase de soufflage : l'intérieur de la préforme 3 est mis en communication avec la source **24** d'air de soufflage, la pression **P** dans la préforme **3** croissant brutalement jusqu'à atteindre la valeur de la pression de soufflage. Compte tenu du temps de réponse de l'électrovanne **26** de soufflage, l'instant **t_{D}** de début de soufflage accuse un léger retard par rapport à un instant, dit top soufflage et noté **t_{S}**, auquel l'unité **31** de contrôle commande simultanément la fermeture de l'électrovanne **22** de présoufflage et l'ouverture de l'électrovanne **26** de soufflage. A l'instant **t_{D}** de début de soufflage correspond sur la courbe de pression un point singulier, dénommé point de début de soufflage et noté **D**, où la courbe s'infléchit et présente un accroissement important de sa pente.

Les inventeurs sont d'avis que le présoufflage est un facteur déterminant dans la qualité du récipient final. Le contrôle du présoufflage s'effectue par l'intermédiaire du tracé de la courbe de pression correspondante. Dans l'idéal, tous les récipients sont identiques. Dans la réalité, la répétitivité du procédé de fabrication n'est pas assurée en raison des variations de paramètres physiques (pression, température) et mécaniques (temps de réponse d'électrovannes, colmatage de circuits pneumatiques, fuites dans les circuits de présoufflage et de soufflage, etc.) qui peuvent affecter les différentes unités **8** de moulage de la machine **1 e**n cours de production des récipients **2**. C'est pourquoi on note des différences sensibles entre les récipients **2**. Afin d'assurer la constance de la qualité des récipients obtenus, pour les mettre autant que possible en conformité avec un standard préétabli, les inventeurs proposent d'assurer une régulation en continu des opérations de présoufflage en rétroagissant sur l'un au moins des paramètres suivants :
i. température **T** de chauffe des préformes ;
ii. pression **P_{P}** de présoufflage ;
iii. débit **D_{P}** de présoufflage ;
iv. vitesse **V_{E}** d'étirage ;
v. top présoufflage **t_{P}** ;
vi. top soufflage **t_{S}**.

Par hypothèse, on dispose d'une courbe théorique de présoufflage, (c'est-à-dire la partie de la courbe de pression comprise entre le top départ, pris comme origine des temps, et le point **D**) pour laquelle la qualité du récipient obtenu apparaît conforme à des critères préétablis incluant par exemple la masse du fond du récipient, supposée comprise dans une gamme de valeurs, l'uniformité de l'épaisseur de la paroi, la coaxialité du fond et du col, etc.

Les inventeurs ont considéré qu'il est illusoire de tenter d'obtenir pour chaque récipient produit une courbe strictement identique à la courbe théorique de présoufflage et proposent par conséquent une méthode de contrôle plus simple tout en étant efficace. Suivant cette méthode, on sélectionne sur la courbe théorique au moins un point caractéristique, défini par un doublet temps/pression, jugé caractéristique du bon déroulement des opérations de présoufflage, et on définit autour de ce point une zone de tolérance, combinaison d'une tolérance de temps (suivant l'axe des abscisses) et d'une tolérance de pression (suivant l'axe des ordonnées), pour tenir compte notamment des marges d'erreurs sur les mesures effectuées.

Pour le ou chaque point caractéristique, on compare le point réel, tel qu'issu des mesures effectuées lors de la production, avec le point caractéristique théorique correspondant. En pratique, on vérifie que le point réel, tel que mesuré, se trouve dans la zone de tolérance définie autour du point caractéristique théorique en vérifiant que l'instant du point réel se trouve dans la tolérance de temps et que sa pression se trouve dans la tolérance de pression. Dans l'hypothèse où le point réel se trouve effectivement dans la zone de tolérance, les points réel et théorique sont décrétés confondus. Au contraire, lorsque le point réel se trouve en dehors de la zone de tolérance, les points réel et théorique sont décrétés distincts, auquel cas, comme nous le verrons ci-après, des mesures de rétroaction peuvent être prises pour modifier au moins l'un des paramètres listés ci-dessus en vue de faire converger, sur la courbe de pression du récipient suivant, le point réel vers le point théorique.

En pratique, on contrôle (et on agit éventuellement sur) les points **A**, **B**, **C** et **D**, seuls ou en combinaison. On décrit à présent comment contrôler et agir sur chacun de ces points.

### Point A

Rappelons que le point **A** correspond à l'instant **t_{A}** à partir duquel la pression dans la préforme **3** commence à croître, après que l'unité **31** de contrôle a commandé l'ouverture de l'électrovanne 22 de présoufflage (au top présoufflage **t_{P}**) pour mettre l'intérieur de la préforme **3** en communication avec la source **20** d'air de présoufflage.

Il est important que la position du point **A** soit sensiblement identique pour l'ensemble des unités **8** de moulage. On détecte donc l'occurrence du point **A**, c'est-à-dire que l'on détecte l'instant à où la pression **P** dans la préforme **3** commence à croître. (Cette mesure peut être effectuée soit en cours de fabrication du récipient **2**, soit a *posteriori,* directement sur la courbe de présoufflage.)

On compare ensuite le point **A** réel avec le point A théorique. Dans la mesure où la pression au point **A** est nulle, on compare en pratique l'instant **t_{A}** du point **A** réel avec l'instant du point **A** théorique, c'est-à-dire l'instant théorique de début de présoufflage, pour vérifier si l'instant **t_{A}** du point **A** réel se trouve dans les tolérances définies pour le point **A**.

Dans l'hypothèse où l'instant **t_{A}** réel de début de présoufflage est postérieur (en tenant compte de la tolérance) à l'instant théorique de début de présoufflage, on avance le top présoufflage **tp**.

Dans l'hypothèse où au contraire l'instant réel **t_{A}** de début de présoufflage est antérieur (en tenant compte de la tolérance) à l'instant théorique de début de présoufflage, on retarde le top présoufflage **t_{P}**.

Les deux courbes tracées en trait plein sur la figure 6 illustrent deux réglages différents du top présoufflage **t_{P}**. La courbe de gauche illustre une avance du top présoufflage **t_{P}** ; la courbe de droite illustre au contraire un retard du top présoufflage **t_{P}**. La courbe théorique est, entre celles-ci, tracée en pointillés.

Plus précisément, Il est préférable de mesurer l'écart séparant l'instant **t_{A}** réel de début de présoufflage de l'instant théorique de début de présoufflage. Et, si l'instant **t_{A}** réel de début de présoufflage est postérieur - respectivement antérieur - à l'instant théorique de début de présoufflage, on avance - respectivement on retarde - le top présoufflage t_{P} de la valeur de l'écart.

Un exemple numérique est fourni dans le tableau ci-après à titre d'illustration de ce qui précède. Les mesures présentées correspondent à la courbe de pression de la figure 4.

| **Paramètre** | **Valeur** |
|---|---|
| Type de récipient | Bouteille 1,5 l |
| Matière | PET |
| Température de chauffe | 120-140°C |
| Pression de présoufflage | 10 bars |
| Vitesse d'étirage | 2000 mm/s |
| Top présoufflage | 0,03 s |
| Temps de réponse de l'électrovanne de présoufflage | 0,01 s |
| Tolérance instant théorique de début de présoufflage | ± 0,005 s |

| **Mesure** | **Valeur** |
|---|---|
| Instant théorique de début de présoufflage | 0,04 s |

Afin de permettre la régulation du point **A**, la machine 1 comprend :
- des moyens pour détecter l'instant **t_{A}** réel de début de présoufflage ;
- des moyens pour comparer cet instant **t_{A}** avec l'instant théorique de début de présoufflage ; et
- des moyens pour réguler le top présoufflage **t_{P}** en fonction du résultat de cette comparaison.

Éventuellement, la machine **1** comprend également des moyens de mémorisation d'une pluralité de points **A** (par exemple une dizaine) détectés sur une série de récipients **2** fabriqués, notamment à des fins d'étude statistique.

Ces moyens peuvent se présenter sous la forme d'instructions d'un produit programme d'ordinateur implémenté dans l'unité **31** de contrôle de la machine **1**.

### Point B

Rappelons que le point **B** correspond au seuil d'écoulement plastique de la préforme **3**, à partir duquel débute son expansion radiale.

Réguler l'instant **t_{B}** de développement (abscisse du point **B**) permet de contrôler l'expansion radiale de la préforme **3**. Une occurrence prématurée, ou au contraire tardive, du point **B** de développement peut pareillement témoigner d'une mauvaise répartition de la matière, avec pour conséquence un défaut de tenue du récipient **2**.

On détecte donc l'occurrence du point **B**, c'est-à-dire que l'on détecte l'instant **t_{B}** où se produit dans la préforme **3** un pic de pression après le top présoufflage **tp** (mais avant le top soufflage **t_{S}**). De même que pour le point **A**, cette mesure peut être effectuée soit en cours de fabrication du récipient **2**, soit de préférence a posteriori, directement sur la courbe de présoufflage.

On compare ensuite le point **B** réel avec le point **B** théorique. En pratique, on compare, d'une part, l'instant **t_{B}** réel de développement avec l'instant théorique de développement et, d'autre part, la pression **P_{B}** réelle de développement avec la pression théorique de développement pour vérifier tous deux se trouvent dans les tolérances définies pour le point **B**.

Le point **B** réel est décrété confondu avec le point **B** théorique lorsqu'il se trouve dans la zone de tolérance définie autour du point **B** théorique.

Lorsqu'au contraire le point **B** réel n'est pas confondu avec le point **B** théorique, c'est-à-dire qu'il se trouve en dehors de la zone de tolérance, on effectue par rétroaction une modification de l'un au moins des paramètres suivants :
i. top présoufflage **t_{P}**,
ii. pression **P_{P}** de présoufflage,
iii. débit de présoufflage **D_{P}**,
iv. vitesse **V_{E}** d'étirage,
v. température **T** de chauffe des préformes.

Plusieurs cas peuvent se présenter, selon que l'instant réel **t_{B}** de développement est antérieur, confondu (c'est-à-dire dans la zone de tolérance) ou postérieur à l'instant théorique de développement, et selon que la pression **P_{B}** réelle de développement est inférieure, égale (c'est-à-dire dans la zone de tolérance) ou supérieure à la pression théorique de développement.

Nous avons vu que la modification du top présoufflage t_{P} produit un décalage du point **A**, vers la droite sur l'axe des temps lorsque le top présoufflage **t_{P}** est retardé, ou au contraire vers la gauche lorsque le top présoufflage **t_{P}** est avancé. En fait, cette modification affecte l'ensemble de la courbe de présoufflage, laquelle se trouve décalée dans le même sens que le point **A**. La modification du top présoufflage **t_{P}** affecte donc l'instant **t_{B}** de développement, c'est-à-dire l'abscisse du point **B**. Dans l'hypothèse où l'instant **t_{B}** réel de développement est, soit antérieur soit postérieur à l'instant théorique de développement, une mesure simple pourrait consister à retarder ou, respectivement, avancer le top présoufflage **t_{P}**. Cependant, l'instant **t_{A}** réel de début de présoufflage (abscisse du point **A**) s'en trouverait affectée sans nécessité. C'est pourquoi il apparaît préférable qu'une rétroaction sur le top présoufflage **t_{P}** pour modifier l'instant **t_{B}** de développement ne soit effectuée que lorsque la modification des autres paramètres ne suffit pas à ramener le point **B** de développement dans sa zone de tolérance.

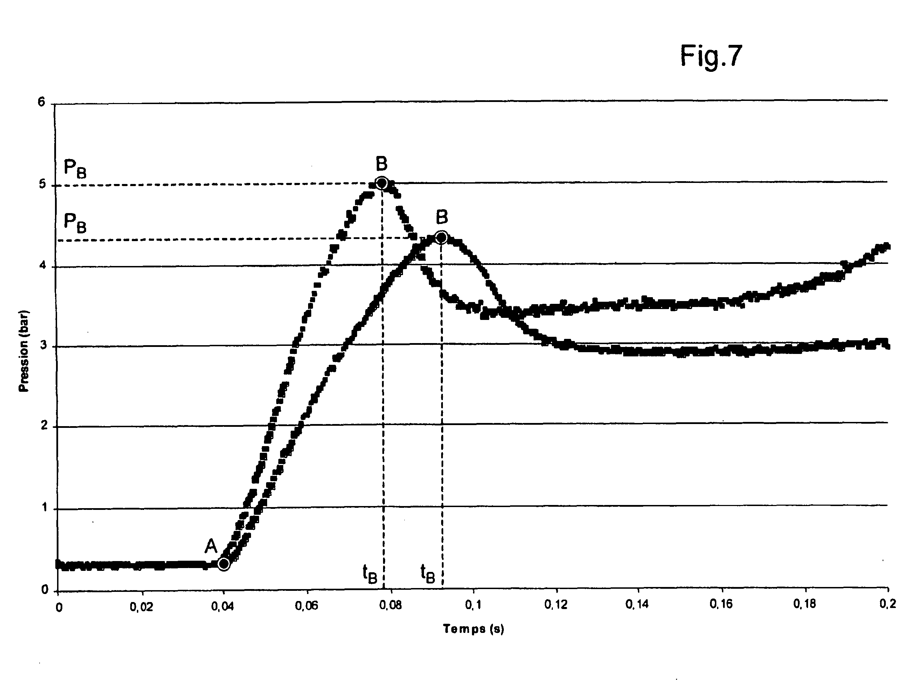

L'influence des autres paramètres est illustrée sur les figures 7, 8 et 9.

La figure 7 illustre l'influence de la pression **P_{P}** ou du débit **D_{P}** de présoufflage sur le déroulement du présoufflage. Il a été constaté que l'influence de la pression **P_{P}** est similaire à celle du débit **D_{P}**. L'influence commune de ces deux paramètres peut donc être ramenée à l'influence de leur produit **P_{P}×D_{P}** : l'augmentation de ce produit peut résulter d'une augmentation de la pression de présoufflage **P_{P}** à débit **D_{P}** constant, d'une augmentation du débit **D_{P}** de présoufflage à pression **P_{P}** constante, ou d'une augmentation simultanée des deux **D_{P}** et **P_{P}** ; au contraire, une diminution du produit **P_{P}×D_{P}** peut résulter d'une diminution de la pression **P_{P}** de présoufflage à débit **D_{P}** constant, une diminution du débit **D_{P}** de présoufflage à pression **P_{P}** constante, ou une diminution simultanée de la pression **D_{P}** et du débit **D_{P}**, étant entendu qu'augmenter l'un tout en diminuant l'autre n'apparaît pas utile.

Sur la figure 7, la courbe de gauche correspond à une valeur du produit **P_{P}×D_{P}** supérieure à celle correspondant à la courbe de droite : on constate qu'une augmentation du produit **P_{P}×D_{P}** entraîne une augmentation de la pente de la courbe de pression au point **A** (c'est-à-dire à l'instant **t_{A}** réel de début de présoufflage), une anticipation de l'instant de développement **t_{B}** et une augmentation de la pression **P_{B}** de développement (sur la courbe, le point **B** est donc déplacé vers le haut et vers la gauche). Au contraire, une diminution du produit **P_{P}×D_{P}** entraîne une diminution de la pente de la courbe de pression au point **A**, un retardement de l'instant **t_{B}** de développement et une diminution de la pression **P_{B}** de développement (sur la courbe, le point **B** est donc déplacé vers le bas et vers la droite).

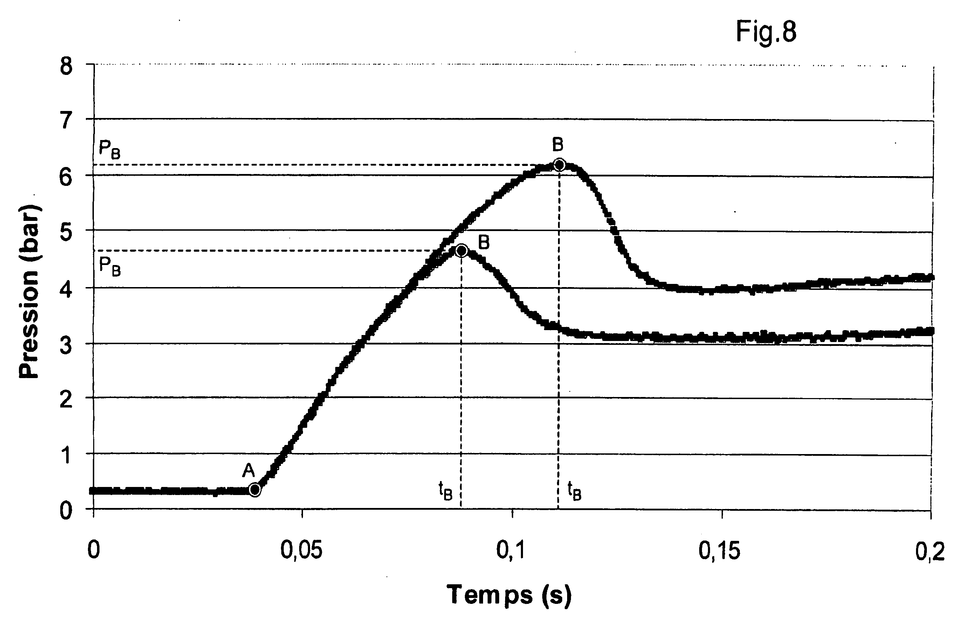

La figure 8 illustre l'influence de la vitesse **V_{E}** d'étirage sur le déroulement du présoufflage. À la courbe inférieure correspond une vitesse **V_{E}** d'étirage supérieure à celle correspondant à la courbe supérieure. On constate que l'augmentation de la vitesse **V_{E}** d'étirage entraîne une anticipation de l'instant **t_{B}** de développement et une diminution de la pression **P_{B}** de développement (sur la courbe, le point **B** est donc déplacé vers le bas et vers la gauche), tandis que la diminution de la vitesse **V_{E}** d'étirage entraîne un retardement de l'instant **t_{B}** de développement et une augmentation de la pression **P_{B}** de développement (sur la courbe, le point **B** est donc déplacé vers le haut et vers la droite). On ne note cependant pas d'influence de la vitesse **V_{E}** d'étirage sur la pente de la courbe de pression entre le point **A** et le point B.

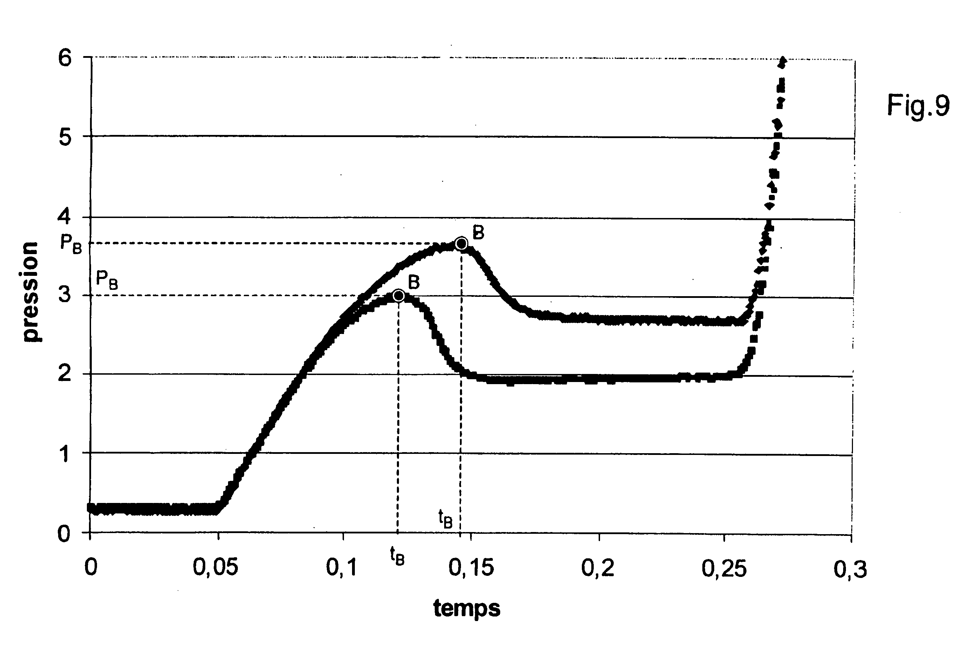

La figure 9 illustre l'influence de la température **T** de chauffe sur le déroulement du présoufflage. À la courbe inférieure correspond une température **T** de chauffe supérieure à celle correspondant à la courbe supérieure. On constate que l'augmentation de la température **T** de chauffe a une influence similaire à l'augmentation de la vitesse **V_{E}** d'étirage : anticipation de l'instant **t_{B}** de développement et diminution de la pression **P_{B}** de développement, tandis que la diminution de la température **T** de chauffe a une influence similaire à la diminution de la vitesse **V_{E}** d'étirage : retardement de l'instant **t_{B}** de développement et augmentation de la pression **P_{B}** de développement.

Nous présentons ci-après les mesures préconisées pour ramener, dans chaque cas possible, le point **B** de développement dans sa zone de tolérance, en fonction de l'influence constatée des paramètres listés ci-dessus et de la priorité donnée à certains paramètres sur d'autres. En pratique, la priorité est donnée à la pression **P_{P}** ou au débit **D_{P}** sur la température **T** de chauffe. Compte tenu de son influence sur l'ensemble de la courbe, et en particulier sur le point A réel de début de présoufflage, le top présoufflage **t_{P}** n'est, en pratique, modifié que lorsque des modifications de la pression **P_{P}**, du débit **D_{P}** ou de la température **T** de chauffe n'ont pas suffi à ramener le point **B** de développement dans sa zone de tolérance. Quant à la vitesse **V_{E}** d'étirage, elle n'est modifiée que pour affiner le positionnement du point **B** de développement (et à condition que la machine 1 soit munie de moyens de réglage de la vitesse **V_{E}** d'étirage).

| **Instant de développement** | **Pression de développement** | **Modification des paramètres** |
|---|---|---|
| Antérieur | Inférieure | Diminuer **T** |
| | Dans la zone de tolérance | Diminuer **D_{P}** ou **P_{P}** |
| | | Diminuer **T** |
| | Supérieure | Diminuer **D_{P}** ou **P_{P}** |
| Dans la zone de tolérance | Inférieure | Diminuer **T** |
| | | Augmenter **D_{P}** ou **P_{P}** |
| | Dans la zone de tolérance | |
| | Supérieure | Augmenter **T** |
| | | Diminuer **D_{P}** ou **P_{P}** |
| Postérieur | Inférieure | Augmenter **D_{P}** ou **P_{P}** |
| | Dans la zone de tolérance | Augmenter **D_{P}** ou **P_{P}** |
| | | Augmenter **T** |
| | Supérieure | Augmenter **T** |
| | | Éventuellement : |
| | | - Diminuer **D_{P}** ou **P_{P}**, |
| | | - Avancer top présoufflage |

Un exemple numérique est fourni dans le tableau ci-après, pour illustrer les valeurs de l'instant et de la pression de développement. Les mesures présentées correspondent à la courbe de pression de la figure 4.

| **Paramètre** | **Valeur** |
|---|---|
| Type de récipient | Bouteille 1,5 l |
| Matière | PET |
| Température de chauffe | 120-140°C |
| Pression de présoufflage | 10 bars |
| Débit de présoufflage* | 40 l/s |
| Vitesse d'étirage | 2000 mm/s |
| Top présoufflage | 0,03 s |
| Tolérance instant de développement | ± 0,005 s |
| Tolérance pression de développement | 0,5 bar |

| **Mesure** | **Valeur** |
|---|---|
| Instant de développement (point B) | 0,07 s |
| Pression de développement (point B) | 5 bars |

| | |
|---|---|
| *donné en normolitre par seconde (équivalent du litre par seconde à la pression atmosphérique) | |

Il est à noter que le déplacement du point **B** de développement (surtout son abscisse, l'instant **t_{B}** de développement) a une incidence sur l'instant t_{C} de fin d'expansion (abscisse du point **C**). Les modifications de paramètres affectant la position du point **B** peuvent donc conduire à devoir modifier la position du point **D** (c'est-à-dire, selon les cas, à avancer ou retarder le top soufflage **t_{S}**) qui peut en effet se trouver décalé par rapport au point **C** ; les réglages correspondants sont présentés ci-après.

Afin de permettre la régulation du point **B**, la machine 1 comprend :
- des moyens pour détecter l'instant **t_{B}** de développement ;
- des moyens pour comparer l'instant **t_{B}** de développement et la pression **P_{B}** de développement avec, respectivement, l'instant et la pression théoriques de développement ;
- des moyens pour réguler le débit **D_{P}** de présoufflage en fonction de cette comparaison.

Ces moyens peuvent se présenter sous la forme d'instructions d'un produit programme d'ordinateur implémenté dans l'unité **31** de contrôle de la machine **1**.

En outre, afin de procéder effectivement à la régulation du débit **D_{P}** de présoufflage, la machine 1 comprend par exemple un régulateur **34** de débit monté sur l'électrovanne de présoufflage et commandé par l'unité **31** de contrôle (Cf. figure 2).

La machine **1** peut, en fonction des paramètres que l'on choisit de réguler, comprendre, par exemple sous forme d'instructions supplémentaire du programme d'ordinateur :
- des moyens de régulation de la pression **P_{P}** de présoufflage en fonction de la comparaison entre le point **B** réel et le point **B** théorique ;
- des moyens de régulation de la température **T** de chauffe en fonction de la comparaison entre le point **B** réel et le point **B** théorique ;
- des moyens de régulation du top présoufflage **t_{P}** en fonction de la comparaison entre le point **B** réel et le point **B** théorique ;
- des moyens de régulation de la vitesse d'étirage **V_{E}** en fonction de la comparaison entre le point **B** réel et le point **B** théorique.

En variante, on peut souhaiter réguler l'instant de développement **t_{B}** indépendamment de la pression de développement **P_{B}**, ou réciproquement réguler la pression de développement **P_{B}** indépendamment de l'instant de développement **t_{B}**.

Dans le premier cas, on détecte le pic de pression et on agit sur l'un au moins des paramètres suivants : pression **P_{P}** de présoufflage, débit de présoufflage **D_{P}**, top présoufflage **t_{P}**, vitesse **V_{E}** d'étirage, température **T** de chauffe pour avancer ou, au contraire, retarder l'instant de développement **t_{B}**.

Dans le second cas, on détecte le pic de pression et on agit sur l'un au moins des paramètres suivants : pression **P_{P}** de présoufflage, débit de présoufflage **D_{P}**, top présoufflage **t_{P}**, vitesse **V_{E}** d'étirage, température **T** de chauffe pour augmenter ou, au contraire, diminuer la pression de développement **P_{B}**.

Éventuellement, la machine **1** comprend également des moyens de mémorisation d'une pluralité de points B (par exemple une dizaine) détectés sur une série de récipients **2** fabriqués, notamment à des fins d'étude statistique.

### Points C, D

Rappelons que le point C correspond à la fin de l'expansion de la préforme **3**, lorsque celle-ci a atteint la surface de la cavité **15** sur sensiblement toute sa hauteur, c'est-à-dire lorsque le volume interne de la préforme **3** a quasiment atteint le volume final du récipient **2**. Au point **C**, la courbe de pression s'infléchit et présente un accroissement de sa pente.

Une fois l'expansion de la préforme **3** terminée, il est inutile de continuer d'y injecter de l'air de présoufflage, dont la pression **P_{P}** est insuffisante pour permettre à la matière (qui continue de refroidir et est donc de moins en moins déformable) d'épouser parfaitement la surface de la cavité **15** : une telle opération constitue donc une perte de temps qui grève la productivité sans incidence sur la qualité du récipient **2**. Il apparaît donc souhaitable de faire débuter le soufflage à peine achevée l'expansion de la préforme **3**. En d'autres termes, il est souhaitable de prendre des mesures pour faire converger, sur la courbe de pression, le point **D** (début du soufflage) vers le point **C** (fin d'expansion de la préforme 3).

On détecte donc l'occurrence du point **C**, c'est-à-dire l'instant **t_{C}** à partir duquel la pression dans la préforme **3** commence à croître de façon linéaire (instant de fin d'expansion). Puis, dans l'hypothèse où le top soufflage **t_{P}** est postérieur à l'instant de fin d'expansion, on avance le top soufflage pour faire converger le point **D** vers le point **C**.

Plus précisément, on mesure le délai séparant l'instant **t_{C}** de fin d'expansion du top soufflage **t_{S}**, et on avance le top soufflage **t_{S}** d'une valeur égale à ce délai. En réalité, on doit tenir compte du temps de réponse de l'électrovanne 26 de soufflage, à cause duquel l'instant **t_{D}** réel de début de soufflage (abscisse du point D) est légèrement postérieure au top soufflage **t_{S}**.

En d'autres termes, soit on mesure le délai séparant l'instant **t_{C}** de fin d'expansion de l'instant **t_{D}** de début de soufflage et on avance le top soufflage **t_{S}** d'une valeur égale à ce délai, soit on mesure le délai séparant l'instant **t_{C}** de fin d'expansion du top soufflage **t_{S}** et on avance le top soufflage **t_{S}** d'une valeur égale à ce délai, augmenté du temps de réponse de l'électrovanne **26** de soufflage.

De même que pour les points A et B, on accepte une certaine tolérance pour le point **C**. En d'autres termes, les points **C** et **D** sont supposés confondus lorsque le délai séparant l'instant **t_{C}** de fin d'expansion de l'instant t_{D} de début de soufflage (ou le délai séparant l'instant **t_{C}** de fin d'expansion du top soufflage **t_{S}** augmenté du temps de réponse de l'électrovanne **26** de soufflage) est inférieur à une valeur prédéterminée.

Sur la figure 10, on a représenté deux courbes : celle de droite correspond à la présence d'un écart entre l'instant **t_{C}** de fin d'expansion et l'instant **t_{D}** de début de soufflage. La courbe de gauche, en pointillés, correspond à une régulation effectuée par rétroaction sur la base de la courbe de droite : on a avancé le top soufflage **t_{S}** de la valeur de l'écart séparant sur la courbe de droite l'instant **t_{C}** de l'instant **t_{D}**.

Un exemple numérique est fourni dans le tableau ci-après à titre d'illustration de ce qui précède. Les mesures présentées correspondent à la courbe de pression de la figure 4.

| **Paramètre** | **Valeur** |
|---|---|
| Type de récipient | Bouteille 1,5 l |
| Matière | PET |
| Température de chauffe | 120-140°C |
| Pression de présoufflage | 10 bars |
| Vitesse d'étirage | 2000 mm/s |
| Top présoufflage | 0,03 s |
| Temps de réponse de l'électrovanne de présoufflage | 0,01 s |
| Temps de réponse de l'électrovanne de soufflage | 0,01 s |
| Tolérance point C | ± 0,005 s |

| **Mesure** | **Valeur** |
|---|---|
| Instant de début de présoufflage (point **A**) | 0,04 s |
| Instant de développement (point **B**) | 0,07 s |
| Instant de fin d'étirage | 0,15 s |
| Instant de fin d'expansion (point **C**) | 0,18 s |

Afin de permettre la régulation du point **D**, la machine **1** comprend :
- des moyens pour détecter l'instant **t_{C}** de fin d'expansion ; et
- des moyens pour réguler le top soufflage **t_{S}** en fonction de l'instant **t_{C}** de fin d'expansion.

Plus précisément, la machine **1** peut comprendre :
- des moyens pour détecter l'instant **t_{D}** de début de soufflage ; et
- des moyens pour comparer l'instant **t_{C}** de fin d'expansion avec l'instant **t_{D}** de début de soufflage, les moyens de régulation étant prévus pour avancer le top soufflage **t_{S}** de la valeur de l'écart entre eux.

Éventuellement, la machine **1** comprend également des moyens de mémorisation d'une pluralité de points **C** et/ou **D** (par exemple une dizaine) détectés sur une série de récipients **2** fabriqués, notamment à des fins d'étude statistique.

En alternative (ou en complément), la machine 1 peut comprendre des moyens pour comparer l'instant **t_{C}** de fin d'expansion avec le top présoufflage **t_{S}**, les moyens de régulation étant prévus pour avancer le top soufflage **t_{S}** de la valeur de l'écart entre eux, augmenté du temps de réponse de l'électrovanne de soufflage **26**.

Ces moyens peuvent se présenter sous la forme d'instructions d'un produit programme d'ordinateur implémenté dans l'unité **31** de contrôle.

## Revendications

1. Procédé de fabrication d'un récipient (**1**) par étirage soufflage dans un moule (**11**) à partir d'une ébauche (**3**) en matière plastique, qui comprend les opérations consistant à :
- chauffer l'ébauche (**3**) à une température de chauffe (**T**) prédéterminée ;
- introduire l'ébauche(**3**) dans le moule (**11**) ;
- étirer l'ébauche (**3**) au moyen d'une tige (**16**) déplacée à une vitesse d'étirage (**V_{E}**) prédéterminée ;
- à un instant prédéterminé, dénommé top présoufflage (**t_{P}**), commander l'ouverture d'une électrovanne (**22**) pour mettre en communication l'intérieur de l'ébauche (**3**) avec une source (**20**) de gaz à une pression de présoufflage (**P_{P}**) et un débit (**D_{P}**) de présoufflage prédéterminés :
- mesurer la pression (**P**) régnant à l'intérieur de l'ébauche (**3**) ;
- détecter un pic de pression ;
- mémoriser l'instant (**t_{B}**) auquel se produit ce pic de pression et/ou la pression (**P_{B}**) correspondante régnant dans l'ébauche (**3**) ;
- comparer l'instant (**t_{B}**) et/ou la pression (**P_{B}**) du pic détecté avec, respectivement, un instant et/ou une pression prédéterminés d'un pic théorique de pression ;
- si le pic mesuré et le pic théorique ne sont pas confondus, modifier au moins l'un des paramètres suivants : pression (**P_{P}**) de présoufflage. débit de présoufflage (**D_{P}**), top présoufflage (**t_{P}**), vitesse (**V_{E}**) d'étirage, température (**T**) de chauffe.

2. Procédé selon la revendication 1, qui comprend, si l'instant (**t_{B}**) et la pression (**P_{B}**) du pic détecté sont, respectivement, antérieur et inférieure à l'instant et à la pression du pic théorique, une opération consistant à diminuer la température de chauffe (**T**).

3. Procédé selon la revendication 1, qui comprend, si l'instant (**t_{B}**) et la pression (**P_{B}**) du pic détecté sont, respectivement, antérieur et égale à l'instant et à la pression du pic théorique, une opération consistant à diminuer la pression (**P_{P}**) ou le débit (**Dp**) de présoufflage.

4. Procédé selon la revendication 3, qui comprend une opération supplémentaire consistant à diminuer la température de chauffe (**T**).

5. Procédé selon la revendication 1, qui comprend, si l'instant (**t_{B}**) et la pression (**P_{B}**) du pic détecté sont, respectivement, antérieur et supérieure à l'instant et à la pression du pic théorique, une opération consistant à diminuer la pression (**P_{P}**) ou le débit (**D_{P}**) de présoufflage.

6. Procédé selon la revendication 1, qui comprend, si l'instant (**t_{B}**) et la pression **(P_{B}**) du pic détecté sont, respectivement, égal et supérieure à l'instant et à la pression du pic théorique, une opération consistant à diminuer la pression (**P_{P}**) ou le débit (**D_{P}**) de présoufflage

7. Procédé selon la revendication 6, qui comprend une opération supplémentaire consistant à augmenter la température de chauffe (**T**).

8. Procédé selon la revendication 1, qui comprend, si l'instant (**t_{B}**) et la pression (**P_{B}**) du pic détecté sont, respectivement, postérieur et supérieure à l'instant et à la pression du pic théorique, une opération consistant à augmenter la température de chauffe (**T**).

9. Procédé selon la revendication 8, qui comprend une opération supplémentaire consistant à diminuer le débit (**D_{P}**) de présoufflage.

10. Procédé selon l'une des revendications 8 ou 9, qui comprend une opération supplémentaire consistant à avancer le top présoufflage (**t_{P}**).

11. Procédé selon la revendication 1, qui comprend, si l'instant (**t_{B}**) et la pression (**P_{B}**) du pic détecté sont, respectivement, postérieur et égale à l'instant et à la pression du pic théorique, une opération consistant à augmenter la pression (**P_{P}**) ou le débit (**D_{P}**) de présoufflage.

12. Procédé selon la revendication 11, qui comprend une opération supplémentaire consistant à augmenter la température de chauffe (**T**).

13. Procédé selon la revendication 1, qui comprend, si l'instant (**t_{B}**) et la pression (**P_{B}**) du pic détecté sont, respectivement, postérieur et inférieure à l'instant et à la pression du pic théorique, une opération consistant à augmenter la pression (**P_{P}**) ou le débit (**D_{P}**) de présoufflage.

14. Procédé selon la revendication 1, qui comprend, si l'instant (t_{B}) et la pression (**P_{B}**) du pic détecté sont, respectivement, égal et inférieure à l'instant et à la pression du pic théorique, une opération consistant à augmenter la pression (**P_{P}**) ou le débit (**Dp**) de présoufflage.

15. Procédé selon la revendication 14, qui comprend une opération supplémentaire consistant à diminuer la température de chauffe (**T**).

16. Unité de contrôle d'une machine (**1**) de fabrication de récipients comprenant un produit programme d'ordinateur, pour la mise en oeuvre d'un procédé selon l'une des revendications 1 à 15 qui comprend des instructions pour :
- commander l'ouverture de l'électrovanne (**22**) ;
- prendre en compte l'instant (**t_{B}**) de développement ;
- prendre en compte la pression (**P_{B}**) de développement ;
- prendre en compte l'instant théorique de développement ;
- prendre en compte la pression théorique de développement ;
- comparer l'Instant (t_{B}) de développement avec l'instant théorique de développement ;
- comparer la pression (**P_{B}**) de développement avec la pression théorique de développement ;
- réguler l'un au moins des paramètres suivants : pression (**P_{P}**) de présoufflage, débit de présoufflage (**D_{P}**), top présoufflage (**tp**), vitesse (**V_{E}**) d'étirage, température (**T**) de chauffe en fonction du résultat de ces comparaisons.

## Patentansprüche

1. Verfahren zum Herstellen eines Behälters (1) durch Streckblasen in einer Form (11) ausgehend von einem Rohling (3) aus Kunststoff, das die folgenden Schritte umfasst, die darin bestehen:
- den Rohling (3) auf eine vorgegebene Heiztemperatur (T) zu erhitzen;
- den Rohling (3) in die Form (11) einzugeben;
- den Rohling (3) mittels eines Stifts (16), der mit einer vorgegebenen Streckgeschwindigkeit (V_{E}) verlagert wird, zu strecken;
- zu einem vorgegebenen Zeitpunkt, der Vorblassynchronisierpunkt (t_{P}) genannt wird, das Öffnen eines Elektroventils (22) zu steuern, um eine Verbindung zwischen dem Inneren des Rohlings (3) und einer Quelle (20) für Gas unter einem Vorblasdruck (Pp) und einem Vorblasdurchsatz (D_{P}), die vorgegeben sind, herzustellen;
- den Druck (P), der im Inneren des Rohlings (3) herrscht, zu messen;
- eine Druckspitze zu detektieren;
- den Zeitpunkt (t_{E}), zu dem diese Druckspitze entsteht, und/oder den entsprechenden Druck (P_{B}), der in dem Rohling (3) herrscht, zu speichern;
- den Zeitpunkt (t_{B}) und/oder den Druck (P_{B}) der detektierten Spitze mit einem vorgegebenen Zeitpunkt bzw. einem vorgegebenen Druck einer theoretischen Druckspitze zu vergleichen;
- dann, wenn die gemessene Spitze und die theoretische Spitze nicht übereinstimmen, wenigstens einen der folgenden Parameter zu modifizieren: Vorblasdruck (P_{P}), Vorblasdurchsatz (D_{P}), Vorblassynchronislerpunkt (t_{P}), Streckgeschwindigkeit (V_{E}), Heiztemperatur (T).

2. Verfahren nach Anspruch 1, das dann, wenn der Zeitpunkt (t_{B}) und der Druck (P_{B}) der detektierten Spitze früher bzw. niedriger als der Zeitpunkt bzw. der Druck der theoretischen Spitze sind, einen Schritt umfasst, der darin besteht, die Heiztemperatur (T) zu verringern.

3. Verfahren nach Anspruch 1, das dann, wenn der Zeitpunkt (t_{B}) und der Druck (P_{B}) der detektierten Spitze früher als der bzw. gleich dem Zeitpunkt bzw. dem Druck der theoretischen Spitze sind, einen Schritt umfasst, der darin besteht, den Vorblasdruck (P_{P}) oder den Vorblasdurchsatz (D_{P}) zu verringern.

4. Verfahren nach Anspruch 3, das einen zusätzlichen Schritt umfasst, der darin besteht, die Heiztemperatur (T) zu verringern.

5. Verfahren nach Anspruch 1, das dann, wenn der Zeitpunkt (t_{B}) und der Druck (P_{B}) der detektierten Spitze früher bzw. größer als der Zeitpunkt bzw. der Druck der theoretischen Spitze sind, einen Schritt umfasst, der darin besteht, den Vorblasdruck (P_{P}) oder den Vorblasdurchsatz (D_{P}) zu verringern.

6. Verfahren nach Anspruch 1, das dann, wenn der Zeitpunkt (t_{B}) und der Druck (P_{B}) der detektierten Spitze gleich dem bzw. größer als der Zeitpunkt bzw. der Druck der theoretischen Spitze sind, einen Schritt umfasst, der darin besteht, den Vorblasdruck (P_{P}) oder den Vorblasdurchsatz (D_{P}) zu verringern.

7. Verfahren nach Anspruch 6, das einen zusätzlichen Schritt umfasst, der darin besteht, die Heiztemperatur (T) zu erhöhen.

8. Verfahren nach Anspruch 1, das dann, wenn der Zeitpunkt (t_{B}) und der Druck (P_{B}) der detektierten Spitze später bzw. höher als der Zeitpunkt bzw. der Druck der theoretischen Spitze sind, einen Schritt umfasst, der darin besteht, die Heiztemperatur (T) zu erhöhen.

9. Verfahren nach Anspruch 8, das einen zusätzlichen Schritt umfasst, der darin besteht, den Vorblasdurchsatz (D_{P}) zu verringern.

10. Verfahren nach einem der Ansprüche 8 oder 9, das einen zusätzlichen Schritt umfasst, der darin besteht, die Vorblassynchronisierpunkt (tp) voreilen zu lassen.

11. Verfahren nach Anspruch 1, das dann, wenn der Zeitpunkt (t_{B}) und der Druck (P_{B}) der detektierten Spitze später als der bzw. gleich dem Zeitpunkt bzw. dem Druck der theoretischen Spitze sind, einen Schritt umfasst, der darin besteht, den Vorblasdruck (P_{P}) oder den Vorblasdurchsatz (D_{P}) zu erhöhen.

12. Verfahren nach Anspruch 11, das einen zusätzlichen Schritt umfasst, der darin besteht, die Heiztemperatur (T) zu erhöhen.

13. Verfahren nach Anspruch 1, das dann, wenn der Zeitpunkt (t_{B}) und der Druck (P_{B}) der detektierten Spitze später bzw. niedriger als der Zeitpunkt bzw. der Druck der theoretischen Spitze sind, einen Schritt umfasst, der darin besteht, den Vorblasdruck (P_{P}) oder den Vorblasdurchsatz (D_{P}) zu erhöhen.

14. Verfahren nach Anspruch 1, das dann, wenn der Zeitpunkt (t_{B}) und der Druck (P_{B}) der detektierten Spitze gleich dem bzw. kleiner als der Zeitpunkt bzw. der Druck der theoretischen Spitze sind, einen Schritt umfasst, der darin besteht, den Vorblasdruck (P_{P}) oder den Vorblasdurchsatz (D_{P}) zu erhöhen.

15. Verfahren nach Anspruch 14, das einen zusätzlichen Schritt umfasst, der darin besteht, die Heiztemperatur (T) zu verringern.

16. Steuereinheit einer Maschine (1) für die Herstellung von Behältern, die ein Computerprogrammprodukt für die Ausführung eines Verfahrens nach einem der Ansprüche 1 bis 15 enthält, das Befehle umfasst, um:
- das Öffnen des Elektroventils (22) zu steuern;
- den Expansionszeitpunkt (t_{B}) zu berücksichtigen;
- den Expansionsdruak (P_{B}) zu berücksichtigen;
- den theoretischen Expansionszeitpunkt zu berücksichtigen;
- den theoretischen Expansionsdruck zu berücksichtigen;
- den Expansionszeitpunkt (t_{B}) mit dem theoretischen Expansionszeitpunkt zu vergleichen;
- den Expansionsdruck (P_{B}) mit dem theoretischen Expansionsdruck zu vergleichen; und
in Abhängigkeit vom Ergebnis dieser Vergleiche wenigstens einen der folgenden Parameter zu regulieren: Vorblasdruck (P_{P}), Vorblasdurchsatz (D_{P}), Vorblassynchronisierpunkt (tp), Streckgeschwindigkeit (V_{E}), Heiztemperatur (T).

## Claims

1. Method for manufacturing a vessel (1) by drawing and blow-forming in a mould (11) from a preform (3) of plastic material, which comprises operations consisting in:
- heating the preform (3) to a predetermined heating temperature (T);
- introducing the preform (3) into the mould (11);
- drawing the preform (3) by means of a rod (16) displaced at a predetermined drawing speed (V_{E}) ;
- at a predetermined instant, called pre-blowing cue (t_{P}), commanding the opening of a solenoid valve (22) to connect the interior of the preform (3) with a source (20) of gas at a pre-blowing pressure (P_{P}) and a pre-blowing flow rate (D_{P}) that are predetermined;
- measuring the pressure (P) prevailing inside the preform (3);
- detecting a pressure spike;
- storing the instant (t_{B}) at which this pressure spike and/or the corresponding pressure (P_{B}) prevailing in the preform (3) occurs;
- comparing the instant (t_{B}) and/or the pressure (P_{B}) of the detected spike with, respectively, a predetermined instant and/or pressure of a theoretical pressure spike;
- if the measured spike and the theoretical spike do not match, modifying at least one of the following parameters: pre-blowing pressure (P_{P}), pre-blowing flow rate (D_{P}), pre-blowing cue (t_{P}), drawing speed (V_{E}), heating temperature (T).

2. Method according to Claim 1, which comprises, if the instant (t_{B}) and the pressure (P_{B}) of the detected spike are, respectively, prior to and less than the instant and the pressure of the theoretical spike, an operation consisting in reducing the heating temperature (T).

3. Method according to Claim 1, which comprises, if the instant (t_{B}) and the pressure (P_{B}) of the detected spike are, respectively, prior to and equal to the instant and the pressure of the theoretical spike, an operation consisting in reducing the pre-blowing pressure (P_{P}) or flow rate (D_{P}).

4. Method according to Claim 3, which comprises an additional operation consisting in reducing the heating temperature (T).

5. Method according to Claim 1, which comprises, if the instant (t_{B}) and the pressure (P_{B}) of the detected spike are, respectively, prior to and greater than the instant and the pressure of the theoretical spike, an operation consisting in reducing the pre-blowing pressure (P_{P}) or flow rate (D_{P}).

6. Method according to Claim 1, which comprises, if the instant (t_{B}) and the pressure (P_{B}) of the detected spike are, respectively, equal to and greater than the instant and the pressure of the theoretical spike, an operation consisting in reducing the pre-blowing pressure (P_{P}) or flow rate (D_{P}).

7. Method according to Claim 6, which comprises an additional operation consisting in increasing the heating temperature (T).

8. Method according to Claim 1, which comprises, if the instant (t_{B}) and the pressure (P_{B}) of the detected spike are, respectively, after and greater than the instant and the pressure of the theoretical spike, an operation consisting in increasing the heating temperature (T).

9. Method according to Claim 8, which comprises an additional operation consisting in reducing the pre-blowing flow rate (D_{P}).

10. Method according to one of Claims 8 or 9, which comprises an additional operation consisting in advancing the pre-blowing cue (t_{P}).

11. Method according to Claim 1, which comprises, if the instant (t_{B}) and the pressure (P_{B}) of the detected spike are, respectively, after and equal to the instant and the pressure of the theoretical spike, an operation consisting in increasing the pre-blowing pressure (P_{P}) or flow rate (D_{P}).

12. Method according to Claim 11, which comprises an additional operation consisting in increasing the heating temperature (T).

13. Method according to Claim 1, which comprises, if the instant (t_{B}) and the pressure (P_{B}) of the detected spike are, respectively, after and less than the instant and the pressure of the theoretical spike, an operation consisting in increasing the pre-blowing pressure (P_{P}) or flow rate (D_{P}).

14. Method according to Claim 1, which comprises, if the instant (t_{B}) and the pressure (P_{B}) of the detected spike are, respectively, equal to and less than the instant and the pressure of the theoretical spike, an operation consisting in increasing the pre-blowing pressure (P_{P}) or flow rate (D_{P}).

15. Method according to Claim 14, which comprises an additional operation consisting in reducing the heating temperature (T).

16. Control unit for a machine (1) for manufacturing vessels comprising a computer program product, for implementing a method according to one of Claims 1 to 15 which comprises instructions for:
- commanding the opening of the solenoid valve (22);
- registering the development instant (t_{B});
- registering the development pressure (P_{B});
- registering the theoretical development instant;
- registering the theoretical development pressure;
- comparing the development instant (t_{B}) with the theoretical development instant;
- comparing the development pressure (P_{B}) with the theoretical development pressure;
- regulating at least one of the following parameters: pre-blowing pressure (P_{P}), pre-blowing flow rate (D_{P}), pre-blowing cue (t_{P}), drawing speed (V_{E}), heating temperature (T) as a function of the result of these comparisons.
